# EUROPEAN PATENT SPECIFICATION

(11) **EP 1 016 270 B1**
(45) Date of publication and mention of the grant of the patent: **04.02.2004**
(21) Application number: 98946107.4
(22) Date of filing: 18.09.1998
(51) Int. Cl.: H04N 5/44

(54) **PERIPHERAL ELECTRONIC DEVICE AND SYSTEM FOR CONTROLLING THIS DEVICE VIA A DIGITAL BUS**
ELEKTRONISCHES PERIPHERIEGERÄT UND -SYSTEM ZUM STEUERN DIESES GERÄTES ÜBER EINEN DIGITALEN BUS
DISPOSITIF ELECTRONIQUE PERIPHERIQUE ET SYSTEME SERVANT A COMMANDER CE DISPOSITIF PAR L'INTERMEDIAIRE D'UN BUS NUMERIQUE

(30) Priority: 18.09.1997 US 59507; 25.11.1997 US 66782; 14.01.1998 US 71341
(43) Date of publication of application: 05.07.2000
(73) Proprietor: THOMSON CONSUMER ELECTRONICS, INC., Indianapolis, IN 46290-1024 (US)
(72) Inventor: STAHL, Thomas, Anthony, Indianapolis, IN 46256 (US); RHOADS, Steven, Charles, Carmel, IN 46032 (US); DERRENBERGER, Mike, Arthur, Fishers, IN 46038 (US); IZZAT, Izzat, Hekmat, Carmel, IN 46033 (US); KURUCAY, Saban, Waukesha, WI 53188 (US); CHATTERJEE, Amit, Kumar, Andover, MA 01801 (US); NAGPAL, Sanjeen, Boulder, CO 80303 (US)
(74) Representative: Kohrs, Martin
(86) International application number: PCT/US1998/019483
(87) International publication number: WO 1999/014945

(56) References cited:
- EP-A- 0 849 884
- EP-A- 0 873 009
- WO-A-97/49057
- US-A- 5 499 018
- US-A- 5 608 730
- US-A- 5 617 330
- US-A- 5 617 571
- US-A- 5 635 979

## Description

### Field of the Invention

The invention involves a system for controlling multiple electronic devices, such as consumer electronic devices or the like, via interconnections such as digital data buses. More particularly, this invention concerns an arrangement for managing the interoperability of such devices.

### Background of the Invention

A data bus can be utilized for interconnecting electronic devices such as television receivers, display devices, video-cassette recorders (VCR), direct broadcast satellite (DBS) receivers, and home control devices (e.g., a security system or a temperature control device). Communication using a data bus occurs in accordance with a bus protocol. Examples of bus protocols include the Consumer Electronics Bus (CE Bus), and the IEEE 1394 High Performance Serial Bus.

A bus protocol typically provides for communicating both control information and data. For example, CEBus control information is communicated on a "control channel" having a protocol defined in Electronics Industries Association (EIA) specification IS-60. On an IEEE 1394 serial bus, control information is generally passed using the serial bus' asynchronous services. Control information for a particular application can be defined using for example, CAL (Common Application Language) or AV/C.

Today, most audio/video (AV) devices are controlled with a remote control (RC) unit. The actual physical or direct link may be implemented with infrared (IR), ultrasound (US) or radio-frequency transmission (RF). The protocol between the peripheral device and the RC unit is device specific such that each device comes with its own RC unit. Each such peripheral device interprets the key presses it receives via its direct link and carries out the corresponding actions. These actions can include, but do not require, the activation of an on-screen display (OSD) mechanism on a controlling or display device (e.g., TV). More importantly, even when such an OSD mechanism is activated, it serves only as a visual feedback to the user. The actual control is driven by input on the RC unit and takes place even when the display device is off (i.e. OSD not visible to the user).

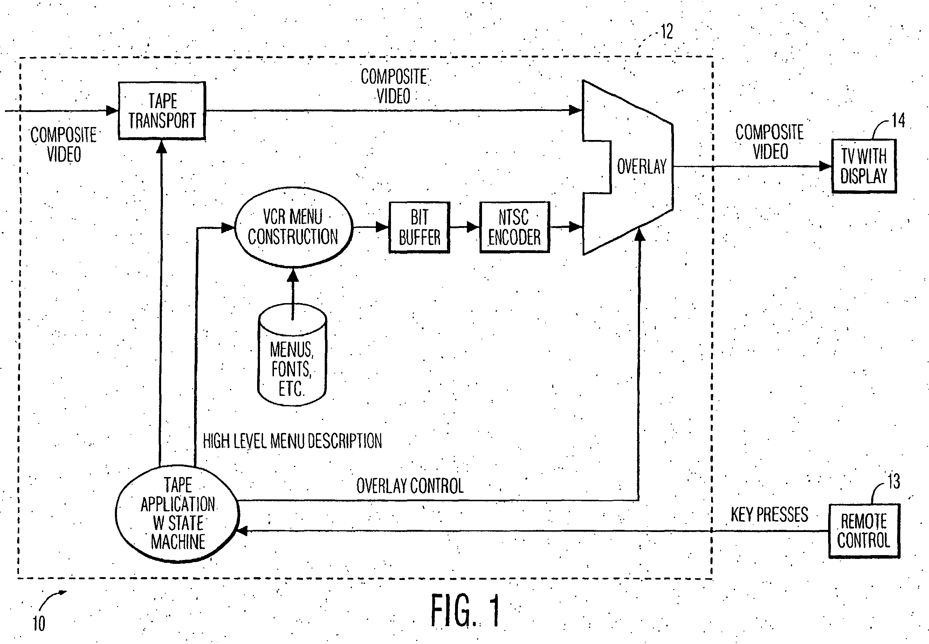

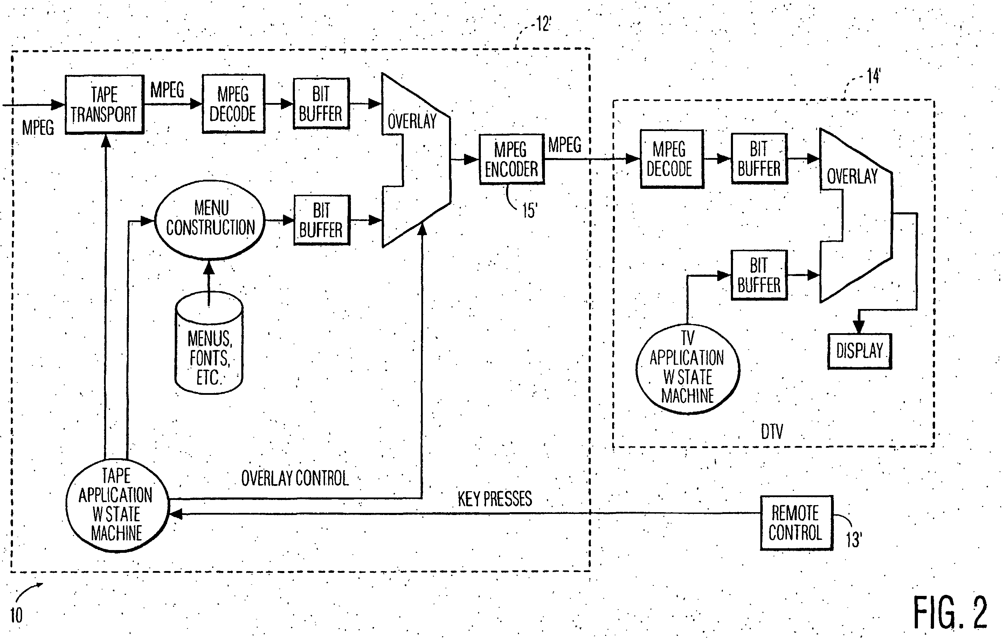

An OSD of such A/V devices is generated in the peripheral device and is output on the NTSC output of the device in the same manner as any other video signal. Thus, no additional hardware or software is needed in either the peripheral or the display device. Figure 1 illustrates a present A/V system 10 having a VCR 12 and a display device 14 (e.g., television) that employs such a control methodology. Menus associated with controlling VCR 12 are generated by the VCR 12 and are provided to the display device 14 via the NTSC output of the VCR 12 as a composite video. Unfortunately, to use the same approach (See Figure 2) with a digital TV (DTV) as a display device 14' is not practical since it would require the menus to be transported as MPEG-2 transport streams. Generation of such streams necessitates integrating an MPEG encoder 15' into all peripheral devices which greatly increases the cost and complexity of such consumer electronic devices.

U.S. Pat. No. 5,608,730 discloses a bi-directional communication system, wherein a transmitting device can lock and unlock a receiving device. Audio/video data is transmitted on separate dedicated lines, which are not part of the D2B bus, for example, L1, L2, or L3, between devices. Control data for controlling the receiving device or data indicative of the status of the device is transmitted, preferably in conformance with D2B, via a separate bi-directional bus. A display device may display messages based on this data. A means to "lock" the receiving device is provided if the amount of data to be transmitted is greater than 16 bytes.

U.S. Pat. Nos. 5,617,330 discloses an architecture that utilizes the D2B bus. The D2B bus is a control bus that is not designed to pass audio/video content. Thus, such audio/video content would be transferred using typical analog connections that are not part of the D2B bus. In particular, this patent teaches a local communication system, wherein messages from more than one device may be simultaneously displayed. The audio and video signals are passed between the devices via a separate and unique path (see col. 2, lines 39-45).

U.S. Pat. No. 5,499,018 also discloses an architecture that utilizes the D2B bus. In particular, this patent teaches a local communication system, wherein compound messages indicating the status of the system are compiled from more than one device using audio/video controller ("AVC") sub-devices to interrogate the device. That is, the AVC of each device is connected via a D2B bus and provides control and systematic interrogation of all the sub-devices within each device. Audio/video signals are passed between the devices via separate and unique paths, for example, A, F and L (see col. 2, lines 39-45).

U.S. Pat. No. 5,617,571 teaches a solution for turning off the power of an individual audio/video unit that is interconnected via a D2B bus. As noted above, in such an arrangement, the audio/video signals and control signals are passed between devices via separate buses (see Fig. 1).

### Summary of the Invention

This patent application defines a minimal level of interoperability for exchanging audio/video (A/V) content and associated control between common consumer electronic (CE) devices. An interface based on the IEEE 1394 serial bus for the physical and link layers makes use of a control language such as CAL or AV/C for managing OSDs and connectivity issues. With most of today's products, a video source is chosen on the display device and the user then interacts directly with the device to be controlled (i.e., peripheral device (e.g., VCR)) using the remote control. The menus are generated by the peripheral device and are transported to the TV over the composite video link.

The invention defines transferring On Screen Displays (OSDs) (e.g., menus) from a peripheral device ( such as a digital VCR or DVHS) to a controlling device (such as a digital television or DTV) using one of several formats such as (1) sending one frame of video either over the asynchronous using a push method or pull method triggered by a message from the peripheral device to the DTV or over an isochronous channel; (2) transfer a run-length-encoded version of the OSD; (3) transfer the actual information in an OSD bitmap format; ( 4) MPEG-I frame stills transported over the Isochronous link. In most cases, the peripheral device would not use MPEG-I frames for menus since it is difficult to represent text using this method and it is expensive to encode pictures in real time. However, peripheral devices that want to supply an MPEG picture as a background for the menu would be able to do it.

For example, the Push method involves writing the menu of the peripheral device (i.e., the device to be controlled) directly into a bit buffer of the DTV which is available via the IEEE 1394 serial bus. The peripheral device can update the sections of the display that have changed, and let the DTV know when it is finished so that it can dump the updated menu in the Video RAM for display. Alternatively, a PULL method may be employed.

OSD Management Messages and connection management messages will be defined as general structures that can be carried via AV/C or CAL. It should be noted however that these messages will be able to easily be carried by other means. A focus of the present invention is to enable the capability of carrying A/V information over a digital link and providing a means for an A/V device to display its menu or Graphical User Interface (GUI). Further, the present invention relies on a user-machine control paradigm as opposed to the machine-machine paradigm which has previously been commonly discussed with respect to IEEE 1394 and CEBus control.

Still further, the present invention supports using IEC61883 for carrying A/V data across the isochronous channels and 61883 FCP may be used to encapsulate the CAL or AV/C command directly over IEEE 1394 serial bus and therefore allows for coexistence with other control languages. Many of the devices will use a registry table that is built during a discovery process which looks at information stored in each instrument's Self Describing Device Table (SDDT). The SDDT may contain such information as a unique ID, node address; etc. The registry tables would be used by the DTV to build a menu to allow the user to set up connections between components (similar to the user selecting the composite input. for the source of their TV today).

There are several advantages to this control paradigm where the peripheral device displays its menu or GUI on the DTV and accepts commands directly. For example, little of a control language is required to be defined for basic interoperability and device models are not needed. Further, since inputs go directly to the peripheral device and the. OSD is defined as a form of basic video, the control is totally independent of the type of device being controlled thereby assuring long term interoperability.

A control language is required to manage the network, OSD, and for optionally transporting universal commands across the bus. AV/C, CAL or any equivalent control language may be successfully employed in connection with practicing this invention.

### Brief Description Of The Drawing

The invention may be better understood by referring to the enclosed drawing in which:
Figure 1 shows, in simplified block-diagram form, the interoperability of a prior art audio/video system;
Figure 2 shows, in simplified block-diagram form, the extension of the prior art interoperability between a digital VCR and a digital television;
Figure 3 is a simplified schematic block diagram illustrating the IEEE 1394 serial bus protocol;
Figure 4 shows, in simplified block-diagram form, the interoperability of digital devices employing the present invention; and
Figure 5 shows, in a simplified schematic form, the interaction of the digital devices of Figure 4.

In the drawing, reference numerals that are identical in different figures indicate features that are the same or similar.

### Detailed Description of the Drawings

The use of IEEE 1394 serial bus has been suggested for many applications within a Home Network environment. It is being discussed within Video Electronics Standards Association (VESA) for use as a "whole home network." It is being built into the next generation PCs and will be used for many local peripherals including disc drives. It is also clear that this will be an important interface for digital A/V consumer electronic devices such as digital televisions and VCRs. Within the entertainment cluster composed of consumer electronic audio/video devices, there are many different levels of interface support at the application level.

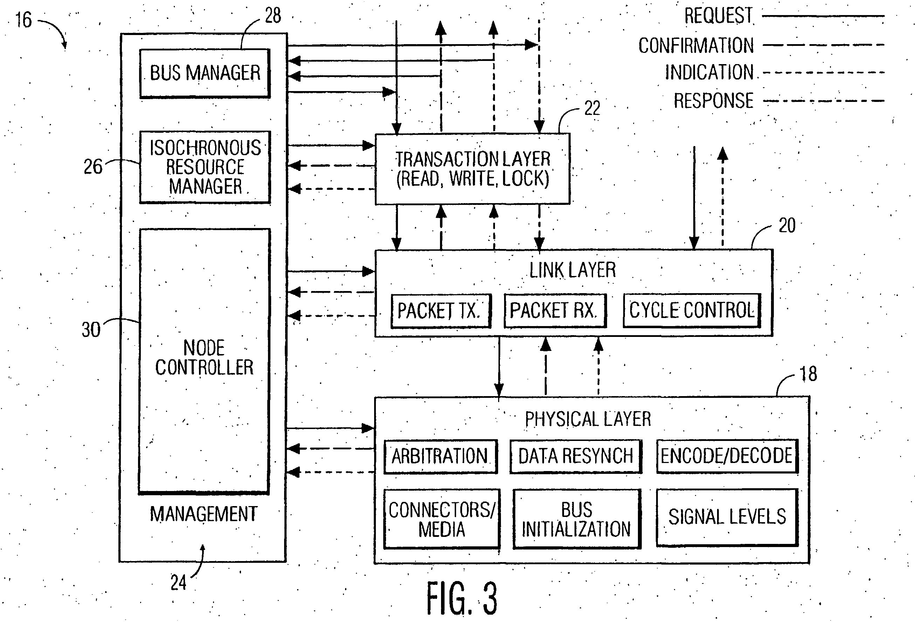

IEEE-1394 is a high speed, low cost digital serial bus 16 developed for use as a peripheral or back-plane bus. Some of the highlights of the bus include: Dynamic node address assignments, Data rates of 100, 200, and 400 Mbits/sec, Asynchronous and isochronous modes, fair bus arbitration, and consistency with ISO/IEC 13213. Figure 3 illustrates the serial bus protocol for the IEEE 1394 serial bus as a set of three stacked layers.

The physical layer 18 has physical signaling circuits and logic that are responsible for power-up initialization, arbitration, bus-reset sensing, and data signaling. Two shielded low-voltage differential signal pairs, plus a power pair are defined for the IEEE-1394 cable. Signaling is done by using Data-Strobe bit-level encoding which doubles jitter tolerance.

Data is formatted into packets in the link layer 20. Two classes of data communication between devices are supported: asynchronous and isochronous. Asynchronous communication can be characterized as "allows acknowledgment," while isochronous communication can be characterized as "always on time." The asynchronous service will be used primarily for control and status messages while isochronous communication will be used for data streams such as MPEG video. The timely nature of isochronous communication is achieved by providing a cycle every 125µsec. Isochronous cycles take priority over asynchronous communication.

Asynchronous transfer can take place any time the bus is free. A minimum of 25 µsec out of every 125 µsec cycle is reserved for asynchronous data transfer. Isochronous transfer provides a real-time data transfer mechanism. An ongoing isochronous communication between one or more devices is referred to as a channel. The channel has to be established first, then the requesting device is guaranteed to have the requested amount of bus time every cycle.

The transaction layer 22 defines a complete request-reply protocol to perform bus transactions. Although transaction layer 22 does not add any services for isochronous data transfer, it does provide a path for management of the resources needed for isochronous services. This is done through reads and writes to the control status register (CSR). Transaction layer 22 also defines a retry mechanism to handle situations where resources are busy and unable to respond. Asynchronous data is transferred between IEEE-1394 nodes utilizing one of three transactions; "read-data" for retrieving data from a different node, "write-data" for transferring data to a different node and "lock-data" for transferring data to a different node for processing and then the data is returned back to the original node.

Serial bus management 24 describes the protocols, services, and operating procedures whereby one node is selected and may then exercise management level control over the operation of the remaining nodes on the bus. There are two management entities defined for IEEE 1394 serial bus; the isochronous resource manager 26 and the bus manager 28. These two entities may reside on two different nodes or on the same node. Bus manager 28 may be absent from the bus. In this circumstance, the isochronous resource manager 26 exercises a subset of the management responsibilities normally assumed by the bus manager 28. The bus manager 28 provides a number of services including; maintenance of the speed and topological map, and bus optimization. The isochronous resource manager provides facilities for allocation of isochronous bandwidth, allocation of channel numbers, and the selection of the cycle master.

Node control is required at all nodes; node controller 30 implements the CSRs required by all serial bus nodes and communicates with the physical 18, link 20, and transaction 22 layers and any application present in the device. Node controller 30 component as well as CSR and configuration ROM facilities are used to configure and manage the activities at an individual node.

For the IEEE 1394 serial bus to function properly, an Isochronous Resource Manager (IRM) 26 and a Bus Manager (BM) 28 will be needed. Since most clusters will include a display device of some kind, it should be required that a Set Top Box with Analog Display and DTV must be IRM and BM capable. In some cases, such as an all audio cluster; a display device may not be present. In this case, it should also be required that a Digital Audio Amp be IRM and BM capable.

The IRM 26 provides the resources necessary for the serial bus to cooperatively allocate and de-allocate the isochronous resources, (channels and bandwidth), required for orderly isochronous operations. The IRM 26 provides a common location for the other nodes to check on availability of channels and bandwidth, and to register their new allocations. The IRM 26, whose location is known immediately upon completion of the self identify process, also provides a common location where serial bus nodes may determine the identity of the BM 28, if one is present.

The BM 28, if present, provides management services to other nodes on the serial bus. These include activation of a cycle master, performance optimization, power management, speed management and topology management.

Functional Control Protocol (FCP) is designed in order to control devices connected through an IEEE-1394 bus. FCP uses the IEEE-1394 asynchronous write packet for sending commands and responses. The IEEE-1394 asynchronous packet structure with FCP imbedded in the data field shown below. The Command/Transaction SET (CTS) specifies the command set (e.g. AV/C, CAL).

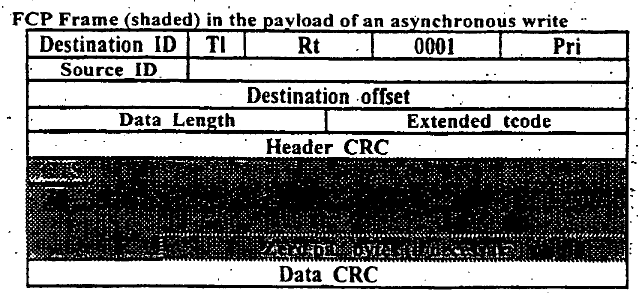

FCP frames are classified as command frames, and response frames. The command frame is written into a command register on a peripheral device and the response frame is written into a response register on a controller. The standard specifies two addresses for the command and the response.

The structure of the isochronous packet in IEC-61883 is shown below. The packet header is composed of two quadlets of an IEEE-1394 isochronous packet. (A quadlet is defined as four 8-bit bytes.) The Common Isochronous Packet (CIP) header is placed at the beginning of the data field of an IEEE-1394 isochronous packet, immediately followed by the real time data.

| | | | | |
|---|---|---|---|---|
| **Data Length** | **Tag** | **Channel** | **Tcode** | **Sy** |
| **Header CRC** | | | | |
| **CIP Header** | | | | |
| **Real Time Data** | | | | |
| **Data CRC** | | | | |

Data length is the data field length in bytes, Tag indicates whether CIP exist (01) or not (00), Channel specifies the isochronous channel number, Tcode=1010, and Sy is an application specific control field.

The 61883 standard defined a generic format for consumer A/V transmission. This format has a two quadlet header as shown below. In the table, SID is Source node_ID, DBS is data block size in quadlets, Fraction Number (FN) allow you to divide source packets for bus time utilization, Quadlet Padding Count (QPC) indicates number of quadlets count, Source Packet Header (SPH) is a flag to indicate whether the packet has a source packet header, rsv indicates reserved for future, Data Block Counter (DBC) is a continuity counter, FMT indicates the format ID such as MPEG2, DVCR, and Format Dependent field (FDF) is format ID specific.

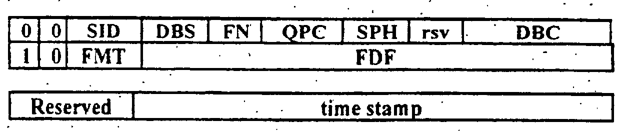

The concept of plugs and plug control registers is used to start and stop isochronous data flows on the bus and to control their attributes. Plug control registers are special purpose CSR registers. The set of procedures that use the plug control registers to control an isochronous data flow are called Connection Management. Procedures (CMP).

Isochronous data flows from one transmitting device to zero or more receiving devices by sending the data on one isochronous channel on the IEEE-1394 bus. Each isochronous data flow is transmitted to an isochronous channel through one output plug on the transmitting device and is received from the isochronous channel through one input plug on each of the receiving devices.

The transmission of an isochronous data flow through an output plug is controlled by one output Plug Control Register (oPCR) and one output Master Plug Register (oMPR) located on the transmitting device. oMPR controls all common isochronous data flow attributes while oPCR controls all other attributes. Similar registers (iPCR, and iMPR) exist for the reception of isochronous data. There is only one oMPR (iMPR) for all output plugs (input plugs). The contents of oMPR (iMPR) include data rate capability and number of plugs among others. oMPR and iMPR each contain a connection counter, channel number, and data rate among others.

There are a number of management procedures for each connection type that allows an application to establish a connection, overlaying a connection, and breaking a connection. These procedures involve allocation of IEEE-1394 resources, setting appropriate values into the plug control registers, reporting possible failure conditions to the application, and managing connections after a bus reset. One such CMP follows.

To transport isochronous data between two A/V devices on IEEE 1394 serial bus, it is necessary for an application to connect an output plug on the transmitting device to an input plug on the receiving device using one isochronous channel. The relationship between one input plug, one output plug and one isochronous channel is called a point-to-point connection. Similarly there are broadcast-out connections (one output plug and one isochronous channel) and broadcast-in connections (one input plug and one isochronous channel)

The flow of isochronous data is controlled by one output plug control register (oPCR) and one output master plug register (oMPR) located on the transmitting side. oMPR controls all the attributes (e.g. data rate capability, broadcast channel base etc.) that are common to all isochronous flows transmitted by the corresponding A/V device.

The reception of an isochronous data flow through an input plug is controlled by one input plug control register (iPCR) and one input master plug register (iMPR) located in the receiving device. iMPR controls all the attributes (e.g. data rate capability etc.) that are common to all isochronous data flows received by the corresponding device.

The major steps involved in establishing a connection are allocation of IEEE 1394 resources (e.g. bandwidth) and setting channel, data-rate, overhead-ID and connection counter in oPCR and iPCR.

An isochronous data flow can be controlled by any device connected to the IEEE 1394 serial bus by modifying the corresponding plug control registers. Although Plug control registers can be modified by asynchronous transactions on IEEE 1394 serial bus, the preferred method of connection management is through the use of AV/C. It is fully within the scope of this invention that CAL may be utilized for connection management.

### Application Control Languages

In order for a consumer electronic device to interact with other devices interconnected via a IEEE 1394 serial bus, a common product mode and common set of commands must be defined. Three standards exist for device modeling and control: CAL, AV/C and the approach adopted for the USB.

CAL and AV/C are control languages that distinguish between logical and physical entities. For example, a television (i.e., a physical entity) may have a number of functional components (i.e., logical entities) such as a tuner, audio amplifier, etc. Such control languages provide two main functions: Resource allocation and Control. Resource allocation is concerned with requesting, using and releasing Generic Network resources. Messages and control are transported by the FCP as defined in IEC-61883 and discussed above. For example, CAL has adopted an object base methodology for its command syntax. An object contains and has sole access to.a set number of internal values known as instance variables (IV). Each object keeps an internal list of methods. A method is an action that an object takes as a result of receiving a message. When a method is invoked, one or more IVs are usually updated. A message consists of a method identifier followed by zero or more parameters. When an object receives a method, it looks through its list of methods for one which matches the method identified in the message. If found, the method will be executed. The parameters supplied with the message determine the exact execution of the method.

The design of control languages is based on the assumption that all consumer electronic products have a hierarchical structure of common parts or functions. For example, CAL treats each product as a collection of one or more of these common parts called Contexts. These contexts are designed to allow access to product functionality in a uniform way. The context data structure is a software model defined in each device that models the operation of all device functions.

A context consists of one or more objects grouped together to form a specific functional sub-unit of a device. Like an object, context is a model of a functional sub-unit. Devices are defined by one or more contexts. CAL has defined a large set of contexts to model various types of consumer electronic devices. Each context, regardless of what product it is in, operates the same way.

Objects are defined by a set of IVs, for example the IVs for a binary switch object contain required and optional IVs. Required IVs include a variable (current_position) that indicates whether the switch is on or off and the default position (default_position) of the switch. Optional IVs include function_of_positions; reporting_conditions; dest_address; previous_value and report_header. IVs are just like variables in any software program and are supported in CAL as Boolean, Numeric, Character, and Data (array). The IVs in an object can be categorized into three general groups: support IVs, reporting IVs, and active IVs. The support IVs are usually read only variables that define the installation use of the object and operation of the active IVs. Active IVs of an object are the variables that are primarily set or read to operate the object.

The interaction between a controller (e.g., digital television) and target or peripheral device (e.g., digital VCR) can mainly be divided into two major categories:
i) A machine-machine interaction where both controller and peripheral device are machines. It is important to note that for this type of interaction, there is no user initiation at the time of the actual interaction. However, it is possible that the user preprogrammed the controller to carry a specific action at a specific point in time.
ii) A user-machine interaction where a human is initiating actions on the controller.

The primary means of user-machine input for analog audio/video (A/V) devices is the use of a remote control unit or the front panel. Some of the interaction may also makes use of an on-screen display (OSD) mechanism. In this kind of interaction the user interacts directly with the peripheral device.

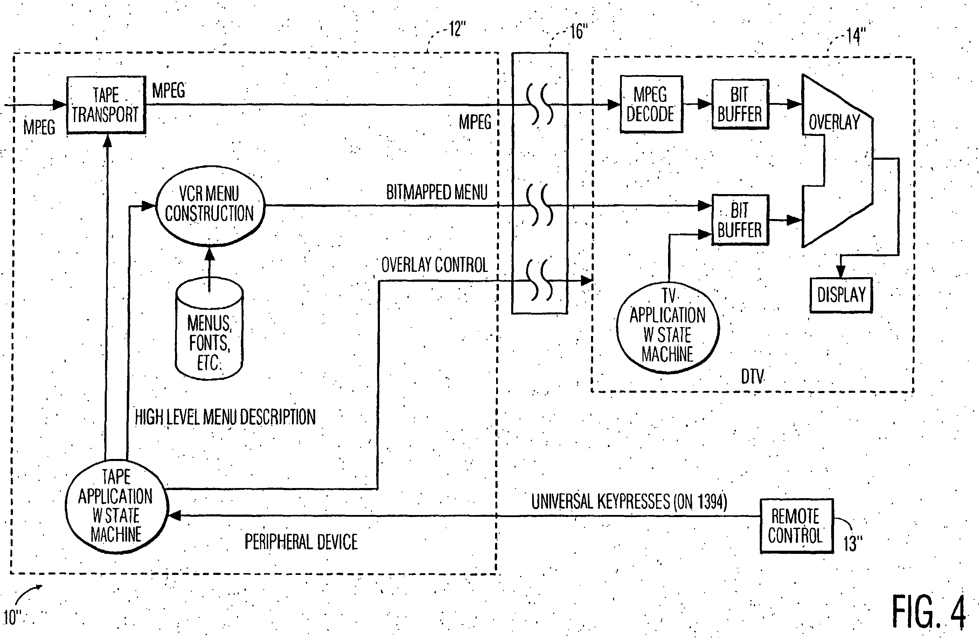

The present application defines a base level of interoperability between devices from different manufacturers at a minimal cost. The users have the capability to interact with the A/V devices interconnected via an IEEE 1394 serial bus in a manner to which they are accustomed (i.e. use of an RC unit possibly in connection with an OSD). Figure 4 defines such a system 10" for providing interoperability between digital A/V devices interconnected via an IEEE 1394 serial bus.

In such a system 10", interoperability is achieved by transferring the menu or GUI information directly from the peripheral device 12" (e.g., DVCR) to controlling device 14" (e.g., DTV) utilizing one of the below-defined methodologies. The menu is not transferred as a composite video stream which would require first passing the menu information through a MPEG encoder contained in the peripheral device. The menu is transferred via serial bus 16" to DTV 14" where the menu information is overlayed in DTV 14" with the decoded MPEG stream prior to being displayed.

To simplify the transfer of OSD information, a "Pull" method to transfer the OSD information from the peripheral device or DVCR 12"to the display capable controlling device or DTV 14" may be used. With this method, the bulk of the OSD data is transferred from the peripheral device to a display device by asynchronous read requests issued by the display device. That is, the display device reads the OSD information from the memory of the peripheral device by making use of at least one block read transaction of IEEE 1394. The display device is informed of the location and size of the OSD data via a "trigger" command which is sent from the peripheral device to the display device when the peripheral device is ready to begin transferring data.

Since the OSD information on the peripheral device is updated in response to user entered data (such as from a remote controller 13), the display device is alerted of the availability of newly updated data. This can be achieved by sending a short message (i.e., "trigger") to the OSD object of the controlling device. It should be noted that such a message needs to inform the display device of the starting location as well as length of the OSD data to be read. The length is necessary since the application in the controlling device is going to make use of asynchronous read transactions of IEEE 1394.

If the length is greater than what would fit into the maximum packet length possible for the particular IEEE 1394 network, the controller may initiate multiple block read transactions until all the OSD information has been read. In addition to the starting location and length of the current OSD data to be transferred to a display device, a field indicating the type of OSD data is useful. This is especially useful since in this case the same mechanism can also be used to trigger the OSD mechanism of a display device to display such things as error, warning and/or status messages. The differentiation of the type of OSD data is helpful for the display device and/or user to decide whether it really wants it to be displayed (for example a user watching a movie may want to ignore things such as status messages).

The peripheral devices may indicate to the controller (i.e., display device) that it has OSD data ready to be transferred. An OSD Trigger message containing the starting offset address, length of the OSD data and the OSD_type information is sent to the controller. The format of one such a message is defined below. This information will be used to determine the number of read requests it need to generate. The display device would pull the menu by reading it from the peripheral devisee's bus mapped memory space. This message could be encapsulated in CAL or AV/C.

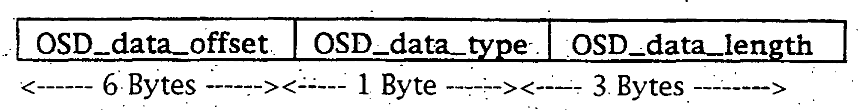

| | |
|---|---|
| OSD_data offset | 48 bit offset address used in IEEE 13 94 where the OSD data. can be found on the target node. |
| OSD_data_type | 8 bit field indicating the type of OSD data presented. |

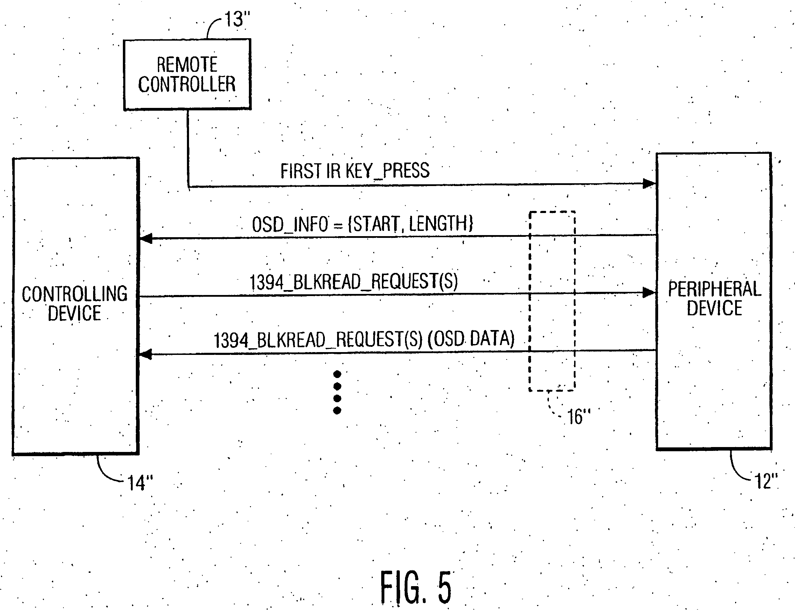

A typical ordered flow may include the following messages, as illustrated in Figure 5. The peripheral device (e.g:, digital VCR 12") receives a command pertaining to a first key press from the corresponding remote controller 13". In response to the command, the peripheral device provides a message to the controller (e.g., digital television 14") which includes the starting location and the length of the OSD information corresponding to the appropriate menu. Next, the controller sends a message to the peripheral device indicating a block read request. The peripheral device responds with a block read response and OSD data. This is repeated until the entire menu is transferred to the controller.

Defined below are alternative methods for transferring an OSD menu from a peripheral device to a controlling display device.

An asynchronous push method which primarily uses IEEE 1394 asynchronous write transactions initiated by the peripheral device may be used to write the OSD data onto the controller. This approach allows a peripheral device to write its menu contents into a controller device. Since it is expected that the menus will be larger than the MTU (Maximum Transfer Unit) of the bus, a fragmentation header can be added. The menu transport layer should add this header. On the receiving side, this layer reassembles the menu and passes it to higher layers. A possible fragmentation header is defined below. The fragmentation header is one quadlet and contains a sequence number and the source of the fragment.

| | |
|---|---|
| **Fragment** **sequence no** **(2) bytes** | **Fragment source** **(node_id)** **(2) bytes** |

Other methods can be used to fragment and reassemble the OSD data while transferring using an asynchronous push methodolgy.

An isochronous transport method provides for broadcasting the OSD data over one of the Isochronous channels provided by IEEE 1394. Bandwidth would need to be reserved and held as long as the peripheral is being controlled using the OSD. It would also be possible that there would not be enough bandwidth left for the reservation of the channel. This could create a situation where the user is not able to get the feedback they require.

An Asynchronous Stream method would be similar to the Isochronous Stream method except that it would use an Asynchronous Stream to carry the OSD information. An Asynchronous Stream is essentially the same as an Isochronous Stream except that there is no bandwidth reservation and the stream is sent in the Asynchronous portion of the bus cycle.

During operation through a direct link, a peripheral device simply receives inputs from its RC unit or front panel and carries out corresponding actions. However, there is a slight complication when, as a result of these actions, an OSD is supposed to be generated on a display device. Since in this case, the actions of the peripheral device were initiated through its own direct link, the peripheral device has no knowledge as to which node on the network to display its OSD. (The peripheral device constructs the OSD data (i.e., OSD blocks defined by a header) and stores it in its memory area.) Therefore a device which detects initiation of control through its direct link, can send OSD_info messages to each OSD capable device (i.e., devices which have implemented the OSD object). It is up to the application in the display device to decide whether to act on this message or not. For example, if focus on that display device has been given to VCR1 and it receives an OSD_info message from VCR1, it is quite natural for the display device to act on it. If the display device is not focused on the particular device, the user can be alerted of the presence of an OSD display request by a remote unit but can choose to ignore it depending on the OSD_data_type in the received OSD_info message. Since the actual control is through the direct link, it has absolutely no effect on the peripheral device whether any or multiple display devices choose to display the OSD. On the other hand, this mechanism may also be used to inform the user of error conditions, warnings etc. which the user may or may not want to have displayed at the time. Therefore, the OSD_info message includes a field for OSD_data_type to indicate whether the OSD data presented to the display device is a warning message, error message, normal OSD data etc.

OSD data can also be in a descriptive form such as HTML. However, for the purposes of this invention, HTML would be used only for describing how the OSD would look. HTML would not be used for control as it is for the Internet.

After a trigger message is received from the peripheral device, the OSD module in the Display Device requests memory accesses starting at the memory location in the trigger message. At this point, the OSD Module reads the OSD Block 1. The data is received using IEEE 1394 read commands and transferred to the display memory area in the display device. This data is then stored in the Display device's internal memory in the format required by the Display device's OSD controller.

The discovery process allows the controlling device to discover other devices in the network. This process is activated by a bus reset and serves to search and discover existing devices on the network. A bus reset may be caused by connecting/disconnecting a device, software initiated reset etc. This software module relies on some information stored on each device configuration ROM. This information is referred to as Self Description Device (SDD) and contains information such as Model #, Location of menu, URL, EUI Vendor ID etc.

The SDDT of a Display/Controller contains a pointer to an information block which contains information about the display capabilities of the device. The information block may include; type of display (*interlaced or progressive*), maximum bytes per line, true color capability, resolution modes supported (*full, 1*/*2, 1*/*3*), maximum bits/pixel supported for palette mode (*2, 4, 8*), etc. Other methods of discovery can also be used to obtain this information, such as the Home Plug and Play as defined for CAL or the subunit descriptors defined for AV/C.

After the bus initialization is complete, the discovery manager reads the SDD information located in the ROM of each connected device. This information will be built into a registry table.

Each device on the IEEE 1394 serial bus will have a registry table which will be used to keep track of other devices on the bus and their capabilities. For all devices on the bus, this device registry (registry table) will be constantly updated in the discovery process on bus resets. The Registry provides services to the application for mapping volatile characteristics like IEEE 1394 node_ID, IP address etc. to a non-volatile identification scheme used by the application. The application uses the non-volatile 64-bit EUI (Extended Unique Identifier) for identifying any node on IEEE 1394 serial bus. The services of Registry are used to map this 64-bit EUI to volatile IEEE 1394 node_ID or IP.

The "Registry" module is a system service module. The "Registry" system module allows the communication between the nodes within the home network by abstracting their location inside the home network.

The registry table is maintained by the Registry manager within each device and contains the information for each node to provide the service previously specified. This registry table is constantly updated by the Discovery manager on bus resets. Each row of the Registry Table can be as follows:

| | | | | |
|---|---|---|---|---|
| **64-bit** **EUI** | **1394** **node_ID** | **IP** **address** | **Manufac/** **Model#** | **Device** **Type** |

The fields of the registry table are defined as:
- **64-bit EUI** is a 64-bit number that uniquely identifies a node among all the Serial Bus nodes manufactured world-wide. 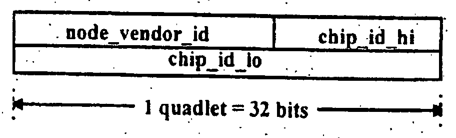
- **1394 node_ID** is a 16-bit number that uniquely identifies a Serial Bus node within a 1394 subnet. The most significant 10 bits are the bus ID and the least significant bits are the physical ID. Bus ID uniquely identifies a particular bus within a group of bridged buses. Physical ID is dynamically assigned during the self-identification process.
- **IP address** is a 32-bit private IP address assigned dynamically.
- **Manufacturer/Model #** is obtained from the device's SDDT and is used to inform the customer of possibilities for selecting a source.
- **Device Type** is also obtained from the device's SDDT and is used to inform the customer of possibilities for selecting a source. This field may also be useful in determining what stream format should be used. For example, a game machine may not use MPEG 2 as an output format.

The application can use the registry to determine the IEEE 1394 . address for any node on the home network based on the 64-bit EUI of that node. The registry will be built during the discovery process after a bus reset. Correlation to a stable identifier such as the EUI is important since node addresses can change during a bus reset.

## Claims

1. A peripheral consumer electronic device (12") comprising:
(a) means for communicating with a digital display device (14") interconnected by a digital data bus (16");
(b) means for providing digital video content (MPEG);
(c) means for generating, in said peripheral device,' digital OSD data (BITMAPPED MENU) representative of an on-screen display menu associated with said peripheral device, said digital data being capable of being displayed on the digital display device; and
(d) means for transferring said digital video content and said digital OSD data capable of being displayed via said digital bus to said display device for subsequent display of the on-screen display menu on said display device, whereby a user is able to interactively control the operation of the peripheral device using said on-screen display menu generated in said peripheral device.

2. The peripheral device of claim 1, wherein said transferring means comprises means for writing via said digital bus said digital data to a memory device (BIT BUFFER) associated with said display device.

3. The peripheral device of claim 2, further comprising a means (TAPE APPLICATION W STATE MACHINE) for navigating said menu in response to a user initiated command (UNIVERSAL KEYPRESSES), wherein said navigating means generates updated digital data in response to said user initiated command and writes said updated digital data to said memory device (BIT BUFFER), said user initiated command controlling operating modes of said peripheral device.

4. The peripheral device of claim 1, further comprising a mapping means (TAPE APPLICATION W STATE MACHINE) for identifying the connectivity of said peripheral device with other devices on said digital bus (16").

5. The peripheral device of claim 4, further comprising means (TAPE APPLICATION W STATE MACHINE) for receiving characteristic information of each device connected on said digital bus.

6. The peripheral device of claim 1, further comprising means for processing video data.

7. A method for controlling a peripheral consumer electronic device (12") interconnected via an IEEE 1394 serial bus to a display device (14"), comprising the steps of:
(a) transferring to said display device, digital video content (MPEG) from said peripheral device utilizing an isochronous transfer mechanism of said serial bus (16");
(b) generating, in said peripheral device, digital data (BITMAPPED MENU) representative of an on-screen display menu associated with said peripheral device, said digital data being capable of being displayed;
(c) transferring said digital data via said serial bus to said display device utilizing an asynchronous transfer mechanism of said serial bus; and
(d) causing said on-screen display menu generated in the peripheral device to be displayed on the display device, whereby a user is able to interactively control the operation of the peripheral device using said on-screen display menu generated in said peripheral device.

8. The method of claim 7, further comprising the steps of:
(a) receiving control information in response to a user initiated command (UNIVERSAL KEYPRESSES), said control information controlling operating modes of said peripheral device;
(b) navigating said menu in said peripheral device in response to said control information, wherein the step of navigating comprises updating said digital data (BITMAPPED DATA); and
(c) transferring said updated digital data to said display device.

9. The method of claim 7, wherein the step of transferring said digital data via said serial bus utilizes an isochronous transfer mechanism of said serial bus.

10. A method for controlling a peripheral consumer electronic device (12") interconnected via a IEEE 1394 serial bus to a display device (14"), comprising:
(a) mapping the connectivity of each device on said serial bus (16");
(b) communicating with said display device utilizing an asynchronous transfer mechanism of said serial bus;
(c) providing digital video content (MPEG) to said display device via said serial bus;
(d) generating, in said peripheral device, digital data (BITMAPPED MENU) representative of an on-screen display menu associated with said peripheral device;
(e) providing to said display device a first message (OSD_INFO) indicative of the availability of said digital data, said first message comprising the location and size of said digital data in a memory device associated with said peripheral device; and
(f) providing said digital data representative of an on-screen display menu to said display device via said serial bus, and causing said on-screen display menu generated in the peripheral device to be displayed on the display device, whereby a user is able to interactively control the operation of the peripheral device using said on-screen display menu generated in said peripheral device.

11. The method of claim 10, further comprising the steps of:
(a) receiving control information in response to a user initiated command (UNIVERSAL KEYPRESSES), said control information controlling operating modes of said peripheral device;
(b) navigating said menu in said peripheral device in response to said control information, wherein the step of navigating comprises updating said digital data (BITMAPPED MENU);
(c) providing to said display device a second message (OSD_INFO) comprising the location and size of said updated digital data; and
(d) transferring said updated digital data to said memory device.

12. A display device (14"), comprising:
(a) means for communicating with a peripheral device (12") interconnected by a digital bus (16");
(b) means (MPEG DECODE) for receiving digital video content (MPEG) from said peripheral device via said digital bus;
(c) means (BIT BUFFER) for receiving, from said peripheral device, digital data (BITMAPPED MENU) representative of an on-screen display menu associated with said peripheral device via said digital bus, said digital data being capable of being displayed; and
(d) means (OVERLAY) for overlaying and displaying said digital data onto said digital video content, whereby a user is able to interactively control the operation of the peripheral device using said on-screen display menu generated in said peripheral device.

## Patentansprüche

1. Elektronisches Consumer-Peripheriegerät (12") mit:
(a) Mitteln zur Kommunikation mit einem digitalen Wiedergabegerät (14"), das über einen digitalen Datenbus (16") angeschlossen ist,
(b) Mitteln zur Bildung eines digitalen Videoinhalts (MPEG),
(c) Mitteln zur Erzeugung von digitalen OSD-Daten (BITMAPPED MENU) in dem Peripheriegerät, die ein Bildschirmwiedergabe-Menu für das Peripheriegerät darstellen, wobei die digitalen Daten in der Lage sind, auf dem digitalen Wiedergabegerät wiedergegeben zu werden, und
(d) Mitteln zur Übertragung des digitalen Videoinhalts und der digitalen OSD-Daten, die über den digitalen Bus zu dem Wiedergabegerät für die darauffolgende Wiedergabe auf dem Bildschirmwiedergabe-Menu auf dem Wiedergabegerät wiedergegeben werden, wodurch ein Benutzer in der Lage ist, den Betrieb des Peripheriegeräts unter Anwendung des in dem Peripheriegerät erzeugten Bildschirmwiedergabe-Menus interaktiv zu steuern.

2. Peripheriegerät nach Anspruch 1, wobei die Übertragungsmittel Mittel zum Schreiben der digitalen Daten über den digitalen Bus zu einer Speichereinheit (BIT BUFFER) für das Wiedergabegerät enthalten.

3. Peripheriegerät nach Anspruch 2 mit Mitteln (TAPE APPLICATION W STATE MACHINE) zur Navigation des Menus aufgrund eines vom Benutzer ausgelösten Befehls (UNIVERSAL KEYPRESSES), wobei die Navigationsmittel aktualisierte digitale Daten aufgrund des vom Benutzer ausgelösten Befehls erzeugen und die aktualisierten digitalen Daten in das Speichergerät (BIT BUFFER) schreiben, und der vom Benutzer ausgelöste Befehl die Betriebsmodi des Peripheriegeräts steuert.

4. Peripheriegerät nach Anspruch 1 mit Abbildungs-Mitteln (TAPE APPLICATION W STATE MACHINE) zur Identifizierung der Konnektivität des Peripheriegeräts mit anderen Geräten auf dem digitalen Bus (16".)

5. Peripheriegerät nach Anspruch 4 mit Mitteln (TAPE APPLICATION W STATE MACHINE) zum Empfang von charakteristischen Informationen jedes an den digitalen Bus angeschlossenen Geräts.

6. Peripheriegerät nach Anspruch 1 mit Mitteln zur Verarbeitung von Videodaten.

7. Verfahren zur Steuerung eines elektronischen Consumer-Peripheriegeräts (12"), das über einen seriellen Bus IEEE 1394 mit einem Wiedergabegerät (14") verbunden ist, mit folgenden Schritten:
(a) Übertragung des digitalen Videoinhalts (MPEG) von dem Peripheriegerät zu dem Wiedergabegerät unter Anwendung eines isochronen Übertragungsmechanismus des seriellen Bus (16"),
(b) Erzeugung von digitalen Daten (BITMAPPED MENU) in dem Peripheriegerät, die ein Bildschirmwiedergabe-Menu für das Peripheriegerät darstellen, wobei die digitalen Daten in der Lage sind, wiedergegeben zu werden,
(c) Übertragung der digitalen Daten über den seriellen Bus zu dem Wiedergabegerät unter Anwendung eines asynchronen Übertragungsmechanismus des seriellen Bus und
(d) Wiedergabe des in dem Peripheriegerät erzeugten Bildschirmwiedergabe-Menus auf dem Wiedergabegerät, wodurch ein Benutzer in der Lage ist, den Betrieb des Peripheriegeräts unter Anwendung des in dem Peripheriegerät erzeugten Bildschirmwiedergabe-Menus zu steuern.

8. Verfahren nach Anspruch 7 mit folgenden Schritten:
(a) Empfang der Steuerinformationen aufgrund eines vom Benutzer ausgelösten Befehls (UNIVERSAL KEYPRESSES), wobei die Steuerinformationen die Betriebsmodi des Peripheriegeräts steuern,
(b) Navigation durch das Menu in dem Peripheriegerät aufgrund der Steuerinformationen, wobei der Schritt der Navigation die Aktualisierung der digitalen Daten (BITMAPPED DATA) enthält, und
(c) Übertragung der aktualisierten digitalen Daten zu dem Wiedergabegerät.

9. Verfahren nach Anspruch 7, wobei der Schritt der Übertragung der digitalen Daten über den seriellen Bus einen isochronen Übertragungsmechanismus des seriellen Bus benutzt.

10. Verfahren zur Steuerung eines elektronischen Consumer-Peripheriegeräts (12"), das über einen seriellen Bus IEEE 1394 mit einem Wiedergabegerät (14") verbunden ist, mit:
(a) Abbildung der Konnektivität jedes Gerätes auf dem seriellen Bus (16"),
(b) Kommunikation mit dem Wiedergabegerät durch Anwendung eines asynchronen Übertragungsmechanismus des seriellen Bus,
(c) Lieferung eines digitalen Videoinhalts (MPEG) zu dem Wiedergabegerät über den seriellen Bus,
(d) Erzeugung von digitalen Daten (BITMAPPED MENU) in dem Peripheriegerät, die ein Bildschirmwiedergabe-Menu für das Peripheriegerät darstellen,
(e) Lieferung zu dem Wiedergabegerät einer ersten Nachricht (OSD_INFO), die die Verfügbarkeit der digitalen Daten anzeigt, wobei die erste Nachricht die Lage und Größe der digitalen Daten in einem zweiten Gerät für das Peripheriegerät vereinigt, enthält,
(f) Lieferung der digitalen Daten, die ein Bildschirmwiedergabe-Menu zu dem Wiedergabegerät darstellen, über den seriellen Bus, und Bewirkung, dass das in dem Peripheriegerät erzeugte Bildschirmwiedergabe-Menu auf dem Wiedergabegerät wiedergegeben wird, wodurch ein Benutzer in der Lage ist, interaktiv den Betrieb des Peripheriegeräts unter Anwendung des in dem Wiedergabegerät erzeugten Bildschirmwiedergabe-Menus interaktiv zu steuern.

11. Verfahren nach Anspruch 10 mit folgenden Schritten:
(a) Empfang der Steuerinformationen aufgrund eines vom Benutzer ausgelösten Befehls (UNIVERSAL KEYPRESSES), wobei die Steuerinformationen die Betriebsmodi des Peripheriegeräts steuern,
(b) Navigation durch das Menu in dem Peripheriegerät durch die Steuerinformationen, wobei der Schritt der Navigation die Aktualisierung der digitalen Daten (BITMAPPED MENU) enthält,
(c) Lieferung einer zweiten Nachricht (OSD_INFO) mit der Lage und Größe der aktualisierten digitalen Daten zu dem Wiedergabegerät und
(d) Übertragung der aktualisierten digitalen Daten zu dem Speichergerät.

12. Wiedergabegerät (14") mit:
(a) Mitteln zur Kommunikation mit einem Peripheriegerät (12"), das über einen digitalen Bus (16") angeschlossen ist,
(b) Mitteln (MPEG DECODE) zum Empfang des digitalen Videoinhalts (MPEG) von dem Peripheriegerät über den digitalen Bus,
(c) Mitteln (BIT BUFFER) zum Empfang von dem Peripheriegerät von digitalen Daten (BITMAPPED MENU), die ein Bildschirmwiedergabe-Menu für das Peripheriegerät darstellen über den digitalen Bus, wobei die digitalen Daten wiedergegeben werden können, und
(d) Mitteln (OVERLAY) zur Überlagerung und Wiedergabe der digitalen Daten auf den digitalen Videoinhalt, wodurch ein Benutzer in der Lage ist, den Betrieb des Peripheriegeräts unter Anwendung des in dem Peripheriegerät erzeugten Bildschirmwiedergabe-Menus interaktiv zu steuern.

## Revendications

1. Dispositif périphérique d'électronique grand public (12") comprenant :
(a) des moyens de communication avec un dispositif d'affichage numérique (14") interconnecté par un bus de données numériques (16") ;
(b) des moyens de fournir un contenu vidéo numérique (MPEG) ;
(c) des moyens de génération, dans ledit périphérique de données OSD numériques (MENU EN MODE POINT) représentatives d'un menu d'affichage écran associé audit dispositif périphérique, lesdites données numériques pouvant être affichées sur le dispositif d'affichage numérique ;
(d) des moyens de transfert dudit contenu vidéo numérique et desdites données OSD numériques pouvant être affichées via ledit bus numérique vers ledit dispositif d'affichage pour un affichage suivant sur le menu d'affichage écran sur ledit dispositif d'affichage, par lequel un utilisateur peut commander de façon interactive le fonctionnement du dispositif périphérique en utilisant ledit menu d'affichage écran généré dans ledit périphérique.

2. Le dispositif périphérique de la revendication 1, où lesdits moyens de transfert comprennent des moyens d'écrire lesdites données numériques via ledit bus numérique vers un dispositif de mémoire (MÉMOIRE TAMPON BINAIRE) associé audit dispositif d'affichage.

3. Le dispositif périphérique de la revendication 2 comprenant en outre des moyens (APPLICATION BANDE AVEC MACHINE D'ETAT) de naviguer dans ledit menu en réponse à une commande initiée par l'utilisateur (PRESSIONS DE TOUCHE UNIVERSELLE) où lesdits moyens de navigation génèrent des données numériques mises à jour en réponse à ladite commande initiée par l'utilisateur et écrivent lesdites données numériques mises à jour dans ledit dispositif mémoire (MEMOIRE TAMPON BINAIRE), ladite commande initiée par l'utilisateur commandant les modes opératoires dudit dispositif périphérique.

4. Le dispositif périphérique de la revendication numéro 1 comprenant en outre des moyens de mappage (APPLICATION BANDE AVEC MACHINE D'ETAT) pour identifier la connectivité dudit dispositif périphérique avec d'autres dispositifs sur ledit bus numérique (16").

5. Le dispositif périphérique de la revendication 4 comprenant en outre des moyens (APPLICATION BANDE AVEC MACHINE D'ETAT) pour recevoir des informations caractéristiques de chaque dispositif connecté audit bus numérique.

6. Le dispositif périphérique de la revendication 1 comprenant en outre des moyens de traiter des données vidéo.

7. Une méthode pour commander un dispositif périphérique d'électronique grand public (12") interconnecté via un bus série IEEE 1394 vers un dispositif d'affichage (14"), comprenant les étapes de :
(a) transfert vers ledit dispositif d'affichage d'un contenu vidéo numérique (MPEG) dudit dispositif périphérique par un mécanisme de transfert isochrone dudit bus série (16") ;
(b) génération, dans ledit dispositif périphérique, des données numériques (MENU EN MODE POINT) représentatives d'un menu d'affichage écran associé audit dispositif périphérique, lesdites données numériques pouvant être affichées ;
(c) transfert desdites données numériques via ledit bus série vers ledit dispositif d'affichage par un mécanisme de transfert asynchrone dudit bus série ; et
(d) provocation de l'affichage sur le dispositif d'affichage du menu d'affichage écran généré dans le dispositif périphérique, un utilisateur pouvant commander de façon interactive le fonctionnement du dispositif périphérique en utilisant le menu d'affichage écran généré dans ledit dispositif périphérique.

8. La méthode de la revendication 7, comprenant en outre les étapes
(a) de réception des informations de commande en réponse à une commande initiée par un utilisateur (PRESSIONS DE TOUCHE UNIVERSELLE), lesdites informations de commande commandant les modes opératoires dans ledit périphérique ;
(b) de navigation dans ledit menu dans ledit périphérique en réponse auxdites informations de commande, l'étape de navigation comprenant la mise à jour desdites données numériques (DONNEES EN MODE POINT) ; et
(c) de transfert desdites données numériques mises à jour audit dispositif d'affichage.

9. La méthode de la revendication 7, dans laquelle l'étape de transfert desdites données numériques via ledit bus série utilise un mécanisme de transfert isochrone dudit bus série.

10. Une méthode pour commander un dispositif périphérique d'électronique grand public (12") interconnecté via un bus série IEEE 1394 vers un dispositif d'affichage (14"), comprenant :
(a) le mappage de la connectivité de chaque dispositif sur ledit bus série (16") ;
(b) la communication avec ledit dispositif d'affichage par un mécanisme de transfert asynchrone dudit bus série ;
(c) la fourniture d'un contenu vidéo numérique (MPEG) audit dispositif d'affichage via ledit bus série ;
(d) la génération dans ledit dispositif périphérique des données numériques (MENU EN MODE POINT) représentatives d'un menu d'affichage écran associé audit dispositif périphérique ;
(e) la fourniture audit dispositif d'affichage d'un premier message (OSD_INFO) indiquant la disponibilité desdites données numériques, ledit premier message comprenant l'emplacement et la taille desdites données numériques dans un dispositif mémoire associé audit dispositif périphérique ; et
(f) la fourniture desdites données numériques représentatives d'un menu d'affichage écran audit dispositif d'affichage via ledit bus série, provoquant l'affichage sur le dispositif d'affichage dudit menu d'affichage écran généré dans le dispositif périphérique, un utilisateur pouvant commander de façon interactive le fonctionnement du dispositif périphérique par ledit menu d'affichage écran généré dans ledit dispositif périphérique.

11. La méthode de la revendication 10, comprenant en outre les étapes :
(a) de réception des informations de commande en réponse à une commande initiée par un utilisateur (PRESSIONS DE TOUCHE UNIVERSELLE), lesdites informations de commande commandant les modes opératoires dans ledit dispositif périphérique ;
(b) de navigation dans ledit menu dans ledit périphérique en réponse auxdites informations de commande, où l'étape de navigation comprend la mise à jour desdites données numériques (MENU EN MODE POINT) ;
(c) de fourniture audit dispositif d'affichage d'un second message (OSD_INFO) comprenant l'emplacement et la taille desdites données numériques mises à jour ; et
(d) de transfert desdites données numériques mises à jour vers le dispositif mémoire.

12. Un dispositif d'affichage (14") comprenant :
(a) des moyens de communication avec un périphérique (12") interconnecté par un bus numérique (16") ;
(b) des moyens (DECODEUR MPEG) de réception d'un contenu vidéo numérique (MPEG) dudit dispositif périphérique via ledit bus numérique ;
(c) des moyens (MÉMOIRE TAMPON BINAIRE) de réception, à partir dudit dispositif périphérique, de données numériques (MENU EN MODE POINT) représentatives d'un menu d'affichage écran associé audit dispositif périphérique via ledit bus numérique, lesdites données numériques pouvant être affichées ; et
(d) des moyens (RECOUVREMENT) de recouvrir et afficher lesdites données numériques dans ledit contenu vidéo numérique, un utilisateur pouvant commander de façon interactive le fonctionnement du dispositif périphérique par ledit menu d'affichage écran généré dans ledit dispositif périphérique.
